(19) 

**Europäisches Patentamt**

**European Patent Office**

**Office européen des brevets**

(11) **EP 3 506 041 A1**

(12) **EUROPEAN PATENT APPLICATION**

(43) Date of publication:
**03.07.2019 Bulletin 2019/27**

(51) Int Cl.:
**G05D 1/08** *(2006.01)*      **B64G 1/24** *(2006.01)*
**B64G 1/00** *(2006.01)*

(21) Application number: **17211042.1**

(22) Date of filing: **29.12.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicants:
• **Deutsches Zentrum für Luft- und Raumfahrt e.V.**
**51147 Köln (DE)**

• **Delft University Of Technology**
**2628 CC Delft (NL)**

(72) Inventors:
• **Sagliano, Marc**
**28211 Bremen (DE)**
• **Mooij, Erwin**
**2622 DD Delft (NL)**

(74) Representative: **REHBERG HÜPPE + PARTNER**
**Patentanwälte PartG mbB**
**Robert-Gernhardt-Platz 1**
**37073 Göttingen (DE)**

(54) **METHOD, APPARATUS AND SPACECRAFT FOR CONSTRAINED ATMOSPHERIC ENTRY**

(57) In a method of controlling a spacecraft (2) having a state x(t) by means of a control u(t), t being the time, during an atmospheric entry, a cost function depending on x(t), u(t) and t is defined in drag-energy dynamics. State constraints to the state x(t) and control constraints to the control u(t) are defined as drag-energy constraints, the state constraints including a starting state and terminal constraints. Determining a minimum of the cost function is transferred into a convex problem by introducing a set of variables corresponding to a reciprocal of drag acceleration. Then, the minimum of the cost function is determined as a drag-energy profile considering the state and constraints. The drag-energy profile is transformed into longitudinal states of the spacecraft (2). Then, that control **u**(t) is applied to the spacecraft (2) that adjusts the longitudinal states of the spacecraft (2) which result in the determined minimum of the cost function.

**Fig. 6**

EP 3 506 041 A1

Description

## TECHNICAL FIELD OF THE INVENTION

The present invention relates to a method of controlling a spacecraft having a state x(t) by means of a control u(t), t being the time, during an atmospheric entry. More particular, the present invention relates to a method comprising the features of the preamble of claim 1. Further, the invention relates to an apparatus for controlling a spacecraft during an atmospheric entry comprising a processor configured to execute such a method and to a spacecraft comprising such an apparatus.

## PRIOR ART

Since the beginning of the Apollo program, entry guidance has been widely treated by engineers and researchers. The first, successful approach, used for several programs (Apollo, Space Transportation System), was based on the planning of an entry trajectory in terms of the drag-velocity plane, see Harpold, J. D. and Graves, C. A., "Shuttle Entry Guidance," Journal of Astronautical Sciences, Vol. 27 No.3, May-June 1979, pp.239-268, 1979. The rationale for this choice resides in the fact that the typical state constraints, i. e. dynamic pressure, heat flux and load factor, as well as the range-to-go, can be efficiently represented in the drag-velocity plane.

The longitudinal guidance can then be derived in several ways. For instance, Lu, P., "Entry Guidance: A Unified Method," Journal of Guidance, Control, and Dynamics, Vol. 37 No.3, May-June, 2014, proposed assuming the equilibrium-glide approximation, Mease, K. D., Chen, D. T., Teufel, P., and Schöneberger, H., "Reduced-Order Entry Trajectory Planning for Acceleration Guidance," Journal of Guidance, Control, and Dynamics, Vol. 25 No.2, March-April, 2002, proposed extracting the longitudinal states (altitude, speed, flight-path angle) from the drag acceleration and its derivatives, and Mooij, E., "Adaptive Heat-Flux Tracking for Re-entry Guidance," AIAA/AAS Astrodynamics Specialist Conference, San Diego, USA, 2014, proposed implementing constraints-tracking guidance schemes. Similar results can be obtained if the drag-velocity plane is replaced by the drag-energy representation, see Lu, P., "Entry Guidance and Control for Reusable Launch Vehicles," AIAA Guidance, Navigation, and Control Conference, San Diego, USA, 1996, Tu, K. Y., Munir, M. S., and Mease, K. D., "Drag-Based Predictive Tracking Guidance for Mars Precision Landing," Journal of Guidance, Control and Dynamics, Vol. 23 No. 4, July-August 2000, pp.620-628, 2000, and Sagliano, M., Development of a Novel Algorithm for High Performance Reentry Guidance, Ph.D. thesis, 2016. In any case, approximations, disturbances and modeling errors make use of a feedback controller necessary to track the scheduled nominal drag profile.

In addition, a bank-reversal logic is usually implemented to keep the heading error within prescribed limits, chosen to steer the vehicle towards the terminal area for energy management (TAEM). In parallel to these approaches, the use of techniques based on optimal control has achieved significant improvements, see Betts, J. T., Practical Methods for Optimal Control and Estimation Using Nonlinear Programming, 2nd ed., SIAM, Philadelphia, 2010, Bollino, K. P., Ross, I. M., and Doman, D., "Optimal Nonlinear Feedback Guidance for Reentry Vehicles," AIAA Guidance Navigation, and Control Conference and Exhibit, Keystone, USA, 2006, Singh, B. and Bhattacharya, R., "Optimal Guidance of Hypersonic Vehicles Using B-Splines and Galerkin Projection," AIAA Guidance, Navigation and Control Conference and Exhibit, 2008, Marwaha, M., Singh, B., Valasek, J., and Bhattacharya, R., "Integrated Guidance and Fault Tolerant Adaptive Control for Mars Entry Vehicle," AIAA Guidance, Navigation, and Control Conference, edited by AIAA, Vol. 2009, 2009, and Sagliano, M., Theil, S., Bergsma, M., D'Onofrio, V., Whittle, L., and G., V., "On the Radau Pseudospectral Method: theoretical and implementation advances," CEAS SPACE Journal, 2017.

The increased CPU capabilities, together with the development of dedicated algorithms, have led to the possibility to transcribe the problem into a discrete, finite-dimensions problem (i.e., a nonlinear programming problem), which can be efficiently solved with one of the available well-known NLP solvers, see Gill, P. E., Murray, W., and Saunders, M. A., User's Guide for SNOPT Version 7: Software for Large-Scale Nonlinear Programming, University of California, San Diego, USA, 2008, and Wächter, A. and Biegler, L. T., "On the implementation of an interior-point filter linesearch algorithm for large-scale nonlinear programming," Math. Program. 106(1), Springer-Verlag, New York, 2006, 2006.

However, it is in general not possible to define an analytical upper bound for the computational time required to obtain a solution, making the use of these techniques in real-time hard.

Significant steps to relax the CPU burden for inflight application can be found in the use of interpolation-based techniques. Saraf, A., Leavitt, J. A., Chen, D. T., and Mease, K. D., "Desing and Evaluation of an Acceleration Guidance Algorithm for Entry," Journal of Spacecraft and Rockets, Vol. 41 No.6, November-December, 2004, used interpolation schemes applied to extremal drag-energy profiles for generating landing footprints for entry missions.

Schierman, J. and Hull, J., "In-Flight Entry Trajectory Optimization for Reusable Launch Vehicles," Guidance, Navigation, and Control and Co-located Conferences, American Institute of Aeronautics and Astronautics, Aug. 2005 implemented a scheme able to compute a trajectory online by using piecewise-linear functions, and solved the online trajectory-generation problem as a linear programming problem.

Sagliano, M., Mooij, E., and Theil, S., "Onboard Trajectory Generation for Entry Vehicles via Adaptive Multivariate Pseudospectral Interpolation," Journal of Guidance, Control, and Dynamics, Vol. 40, No. 2, sep 2016, pp. 466-476, proposed a multivariate pseudospectral approach to provide a real-time capable method able to deal with large off-nominal conditions. Although properly working, the method only provides sub-optimal solutions, as the optimization is replaced by a multivariate interpolation in between optimal solutions.

Over the last thirty years, the development of convex optimization boosted the research aiming at solving optimization problems in real-time, since it is possible to predict an upper bound for the number of operations required to solve the problem, see Boyd, S. and Vandenberghe, L., Convex Optimization, 2004.

This new technology was successfully applied to the powered descent and landing problem by using the so-called lossless convexification introduced by Acikmese, B. and Ploen, S. R., "Convex programming approach to powered descent guidance for mars landing," Journal of Guidance, Control, and Dynamics, Vol. 30, No. 5, 2007, pp. 1353-1366, and further improved over the years, see Blackmore, L., Acikmese, B., and Scharf, D. P., "Minimum-Landing-Error Powered-Descent Guidance for Mars Landing Using Convex Optimization," Journal of Guidance, Control, and Dynamics, Vol. 33, No. 4, July 2010, pp. 1161-1171.

Wang, Z. and Grant, M. J., "Constrained Trajectory Optimization for Planetary Entry via Sequential Convex Programming" propose a method of controlling a spacecraft during an atmospheric entry according to the preamble of independent claim 1. In this known method, a nonlinear planetary-entry optimal control problem is formulated as a sequence of convex problems to facilitate rapid solution. A nonconvex control constraint is avoided by introducing a new state variable to the original three-dimensional equations of motion. Nonconvex objective function and path constraints are convexified by first-order Taylor-series expansions, and nonconvex terms in the dynamics are approximated by successive linearizations. A successive solution procedure is applied to find an approximated solution to the original problem. In each iteration, a convex optimization problem is solved by an interior-point method with deterministic convergence properties. Due to the overall complexity of this known method, it is not suitable for reliably solve the optima control problem in real-time.

## PROBLEM OF THE INVENTION

It is the problem of the present invention to provide a method able to solve the atmospheric entry optimal control problem reliably in real-time.

## SOLUTION

The problem of the invention is solved by a method comprising the features of independent claim 1. Dependent claims 2 to 9 are related to preferred embodiments of the method according to the invention. Claim 10 is directed to an apparatus for controlling a spacecraft during an atmospheric entry inter alia comprising a processor configured to execute the method according to the present invention. Dependent claim 11 relates to a preferred embodiment of the apparatus according to the present invention. Claim 12 is directed to a spacecraft inter alia comprising an apparatus according to the present invention.

## DESCRIPTION OF THE INVENTION

In a method according to the present invention of controlling a spacecraft having a state $\mathbf{x}(t)$ by means of a control $\mathbf{u}(t)$, t being the time, during an atmospheric entry, a cost function depending on the state $\mathbf{x}(t)$, the control $\mathbf{u}(t)$ and the time t is defined in drag-energy dynamics. State constraints to the state $\mathbf{x}(t)$ and control constraints to the control $\mathbf{u}(t)$ are defined as drag-energy constraints. The defined state constraints include a starting state of the spacecraft and terminal constraints to the spacecraft, i.e. a definition of the mission of the spacecraft. The nonlinear and nonconvex problem of determining a minimum of the cost function is transferred into a convex problem by introducing a set of variables corresponding to a reciprocal of drag acceleration. Then the minimum of the cost function is determined as a drag-energy profile considering the state constraints and the control constraints. This determination is straight forward and all at all requires a limited number of steps so that it can reliably be accomplished online. The drag-energy profile is then transformed into longitudinal states including altitude, velocity, flight-path angle, and bank angle of the spacecraft. These longitudinal states of the spacecraft which result in the determined minimum of the cost function are then adjusted by applying the appropriate control u(t) to the spacecraft.

The problem described in terms of drag-energy dynamics is not convex because of the nonlinear equality constraint representing the range-to-go. The introduction of a new set of variables corresponding to the reciprocal or inverse of the drag acceleration allows for a lossless convexification of the problem, and thus for solving the problem in real-time. In contrast to the pre-existing methods including convex optimization applied to entry guidance problems, here only one convex problem is solved to generate a feasible drag-energy profile. The drag-energy profile is then converted into altitude, velocity, flight-path angle and bank angle by exploiting drag-dynamics equations.

In one embodiment of the method according to the present invention, the drag-energy dynamics are discretized, particularly using pseudospectral operators. Preferably, the drag-energy dynamics are discretized using nodes coming from roots of Legendre-Lobatto polynomials. By means of using these nodes instead of a uniform distribution of nodes it is avoided that the discretized drag-energy dynamics suffer from the so called Runge phenomenon.

The cost function may particularly be defined such that determining the minimum of the cost function includes or implies minimizing a second derivative of the drag acceleration throughout the drag-energy profile, i.e. throughout the mission of the spacecraft. This second derivative of the drag acceleration is directly connected to the bank angle. If the second derivative of the drag acceleration is minimized, a smooth drag profile is provided and undesired oscillations in the solution in terms of altitude and flight-path angle are avoided.

The state constraints and the minimum of the cost function may repeatedly or even continuously be updated using the actual state of the spacecraft as the starting state of the spacecraft. This updating may provide a new drag-energy profile as the minimum of the cost function corresponding to a new control $\mathbf{u}$(t). This particularly applies if the spacecraft, for some reason, could not be controlled to keep the previously determined drag-energy profile. A reason for this may, for example, be a strong variation of atmospheric density or the presence of wind gusts. It may also be necessary to update the control constraints prior to determining the new minimum of the cost function considering the updated state constraints and the updated control constraints. It is clear that providing a new drag-energy profile as the minimum of the cost function corresponding to a new control $\mathbf{u}$(t) means that the spacecraft will actually be controlled by applying the new control $\mathbf{u}$(t).

The method according to the present invention may particularly be executed on board of the spacecraft being controlled during its atmospheric entry. The method according to the present invention does not only allow for being executed in real-time. It does also allow for being executed using processors available in or suitable for being provided in an re-entry spacecraft. Executing the method according to the present invention on board of the spacecraft itself avoids the need of transferring any control data to the spacecraft. Further, the method may directly respond to any alterations of the spacecraft during the atmospheric re-entry.

The typical state constraints in addition to the starting state and the terminal constraints, will include heat rate, dynamic pressure and load factor according to standard definitions.

The control $\mathbf{u}$(t) applied to the spacecraft during the atmospheric entry will particularly include variations of the bank angle of the spacecraft. Varying the bank angle of the spacecraft may even be the only means of controlling the spacecraft which is available during the atmospheric entry.

An apparatus according to the present invention for controlling a spacecraft during an atmospheric entry comprises an input port for receiving signals of state sensors which sense parameters of the states $\mathbf{x}$(t) of the spacecraft. A state estimator connected to the input port is configured to determine the state $\mathbf{x}$(t) from the signals of the state sensors. The apparatus comprises a further input port for receiving mission data on the desired mission of the spacecraft defining the terminal constraints, and an output port for outputting control signals to actuators of the spacecraft. A processor of the apparatus according to the invention is configured to execute the method according to the present invention based on the state from the state estimator and the terminal constraints in the mission data and to output the control u(t) as the control signals to the actuators. Drivers for the actuators translating the control signals to the actuators in, for example, control voltages or hydraulic pressures, may be provided as internal parts of the apparatus of the present invention or separately therefrom.

Preferably, the state estimator includes a Kalman filter which fuses the data obtained by the state sensors and estimates position and velocity of the spacecraft. These information, together with mission and scenario inputs are used to compute the range-to-go, and the drag information.

A spacecraft according to the present invention comprises an apparatus according to the present invention for controlling the spacecraft during an atmospheric entry according to the method according to the present invention. Further, the spacecraft comprises state sensors connected to the input port of the apparatus and configured to sense parameters of the state $\mathbf{x}$(t) of the spacecraft, and actuators connected to the output ports and configured to respond to the control signals.

Advantageous developments of the invention result from the claims, the description and the drawings. The advantages of features and of combinations of a plurality of features mentioned at the beginning of the description only serve as examples and may be used alternatively or cumulatively without the necessity of embodiments according to the invention having to obtain these advantages. Without changing the scope of protection as defined by the enclosed claims, the following applies with respect to the disclosure of the original application and the patent: further features may be taken from the drawings, in particular from the illustrated designs and the dimensions of a plurality of components with respect to one another as well as from their relative arrangement and their operative connection. The combination of features of different embodiments of the invention or of features of different claims independent of the chosen references of the claims is also possible, and it is motivated herewith. This also relates to features which are illustrated in separate drawings, or which are mentioned when describing them. These features may also be combined with features of different claims. Furthermore, it is possible that further embodiments of the invention do not have the features mentioned in the claims.

The number of the features mentioned in the claims and in the description is to be understood to cover this exact number and a greater number than the mentioned number without having to explicitly use the adverb "at least". For example, if an input port is mentioned, this is to be understood such that there is exactly one input port or there are two input ports or more input ports. Additional features may be added to the features listed in the claims, or these features may be the only features of the respective product.

The reference signs contained in the claims are not limiting the extent of the matter protected by the claims. Their sole function is to make the claims easier to understand.

## BRIEF DESCRIPTION OF THE DRAWINGS

In the following, the invention is further explained and described with respect to preferred exemplary embodiments illustrated in the drawings.

**Fig. 1**    is a block diagram of a method and an apparatus according to the present invention for controlling a spacecraft during an atmospheric entry.

**Fig. 2**    is a diagram showing the roots of a Legendre-Lobatto polynomial of degree 10.

**Fig. 3**    shows (a) a function reconstructed with uniform nodes, and (b) the same function reconstructed with Legendre-Lobatto nodes.

**Fig. 4**    shows a drag-energy profile determined by the method according to the present invention after transformation in the longitudinal states, altitude, velocity, flight-path angle and bank angle of the spacecraft.

**Fig. 5**    shows how the state constraints dynamic pressure, heat rate and load factor are kept along the drag-energy profile determined by the method according to the present invention

**Fig. 6**    shows the constraints according to Fig. 5 in the energy-drag plane and various drag-energy profiles keeping these constraints and generated according to the method of the present invention; and

**Fig. 7**    shows trajectories of a spacecraft corresponding to the drag-energy profiles according to Fig. 6.

## DESCRIPTION OF THE DRAWINGS

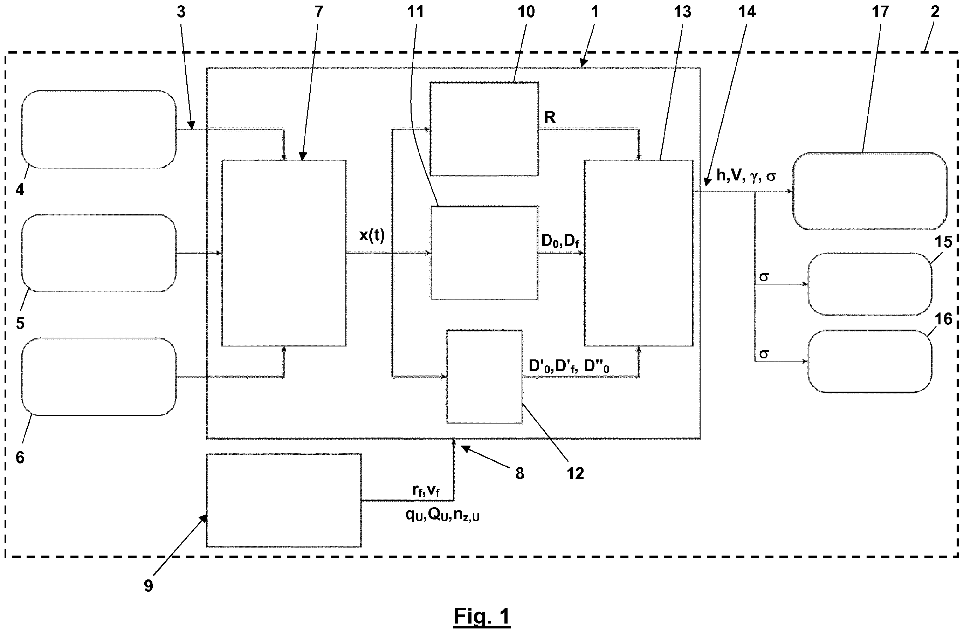

**Fig. 1** depicts an apparatus 1 for controlling a spacecraft during an atmospheric entry. The apparatus is provided on board the spacecraft. This fact is indicated by means of a dashed line surrounding the apparatus 1 and representing the spacecraft 2. The apparatus 1 comprises an input port 3 to which state sensors 4 to 6 are connected. The state sensors sense parameters of a state $\mathbf{x}(t)$ of the spacecraft 2. The apparatus 1 includes a state estimator 7 connected to the input port and configured to determine the state $\mathbf{x}(t)$ from the signals of the state sensors. Typically, the state estimator 7 comprises a Kalman filter as an estimator of the state $\mathbf{x}(t)$ from the signals of the state sensors 4 to 6. At a further input port 8 the apparatus 1 receives mission data related to the desired mission of the spacecraft 2. These mission data may be entered via an input terminal 9 manually or electronically. The mission data include terminal constraints defining the desired state of the spacecraft 2 at the end of the atmospheric entry. The apparatus 1 comprises processors 10 to 12 computing a range-to-go R, initial and final drag values $D_0$ and $D_f$, and drag derivatives $D'_0$, $D'_f$, $D''_0$. Further, the apparatus 1 comprises a processor 13 implementing the method according to the present invention as described in the following. The processor 13 is connected to an output port 14 for outputting control data to actuators 15 and 16 of the spacecraft 2 and an entry trajectory 17.

Many guidance problems can be solved by solving a corresponding optimal control problem, generally formulated as follows: we are interested to minimize a cost function defined as

$$\min J = \Phi\left[t_f, \mathbf{x}\left(t_f\right), \mathbf{u}\left(t_f\right)\right] + \int_{t_0}^{t_f} \Psi\left[\mathbf{x}(t), \mathbf{u}(t)\right] dt$$

where the Φ term is called terminal cost (or Mayer term) and Ψ term running cost (or Lagrange term). Our system also obeys a system of differential equations:

$$\dot{\mathbf{x}} = \mathbf{f}\left(t, \mathbf{x}, \mathbf{u}\right)$$

Where **x** is the state, **u** the control, and **t** the time. Finally, there are usually further constraints **g** on states x and controls u, which are upper and lower bounded by **g$_u$** and **g$_l$**, respectively.

$$\mathbf{g}_L \leq \mathbf{g}\left(t, \mathbf{x}, \mathbf{u}\right) \leq \mathbf{g}_U$$

The atmospheric entry guidance problem can be described by using this form. The main issue with this kind of problems is that it is in general very hard to solve them in real-time. This happens because it is not possible to predict for generic optimal control problems the number of iterations required to compute a valid solution. There is a very special exception. If the problem is "convex", that is it has the form

$$\min \; J = f_0(x)$$

Subject to :

$$f_i(x) \leq a_i, \quad i = 1, \ldots, m$$

Then it is possible to solve the problem in real-time. The method has been partially applied to atmospheric entry (e.g., Liu, X., Shen, Z., Lu, P., "Entry Trajectory Optimization by Second-Order Cone Programming", Journal of Guidance, Control, and Dynamics, 2016, Vol. 39, No. 2, pages 227-241). However what has been done so far was a transformation of the problem into a nonconvex problem. This problem is solved with a series of successive convex problems which approximate better and better the solution, until convergence is reached. What we propose is to transform the so-called drag-energy dynamics to convexify the problem. Therefore we need to solve only one convex problem, and we can transform the solution in the drag-energy space into a physical solution in terms of altitude, velocity, flight-path angle and bank angle. The method can be coded into a device to compute in real-time entry trajectories taking multiple constraints into account.

In first approximation the longitudinal dynamics of an entry vehicle is described by

$$h' = -\frac{\sin \gamma}{D}$$

$$V' = \frac{1}{V} + \frac{g}{DV} \sin \gamma$$

$$\gamma' = \frac{\cos \gamma}{V^2} \left(g - \frac{V^2}{r}\right) \frac{1}{D} - \frac{1}{V^2} u$$

where h is the altitude, γ is the flight-path angle, D is the drag acceleration, V is the speed, g is the gravity acceleration, and r is the radial position of the vehicle. These differential equations are expressed with respect to the specific energy E,

$$E = \frac{V^2}{2} - \left(\frac{\mu_\oplus}{r}\right)$$

The control u is function of the bank angle σ, and the lift-to-drag ratio L/D.

$$u = \frac{L}{D}\cos\sigma$$

The dynamics can be replaced by the so-called drag dynamics. The drag is

$$D = \frac{1}{2}\rho V^2 \frac{S}{m} C_D$$

Where ρ is the atmospheric density, S is the wing surface, m is the mass of the vehicle, and $C_D$ is the drag coefficient. We can differentiate D with respect to the energy twice, obtaining

$$D' = D\left(\frac{\rho'}{\rho} + 2\frac{V'}{V} + \frac{C_D{'}}{C_D}\right)$$

$$D'' = D'\left(\frac{\rho'}{\rho} + 2\frac{V'}{V} + \frac{C_D{'}}{C_D}\right) + D\left(\frac{\rho''}{\rho} - \frac{\rho'^2}{\rho^2} + 2\frac{V''}{V} - 2\frac{V'^2}{V^2} + \frac{C_D''}{C_D} - \frac{C_D'{}^2}{C_D^2}\right)$$

It is possible to demonstrate that every value of h, V, γ and σ can be associated with a corresponding set of values of D, E D' and D". Therefore, if we formulate all the constraints acting on our spacecraft in terms of drag dynamics, we can later on extract the corresponding h, V, γ, and σ which satisfy all the constraints. This is the approach developed for the Space shuttle entry guidance. Constraints to be taken into account typically are the maximum dynamic pressure qu, the heat rate $Q_U$, the load factor $n_{z,U}$, and the range to cover R.

$$\frac{1}{2}\rho(h)V^2 = \bar{q}_U$$

$$\frac{C_1}{\sqrt{R_N}}\sqrt{\rho}V^m = \dot{Q}_U$$

$$\frac{|L(\alpha, h, V)\cos\alpha + D(\alpha, h, V)\sin\alpha|}{g_0} = n_{z,U}$$

$$R \cong -\int_{E_0}^{E_f}\frac{dE}{D}$$

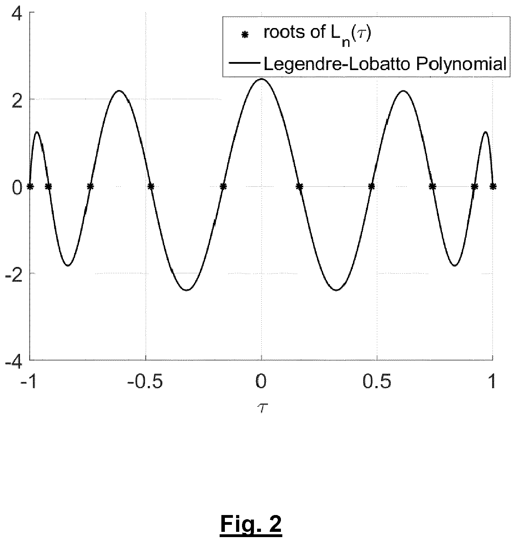

These constraints can be transformed into drag-energy constraints. For each point of the energy, the first three constraints define a corresponding maximum value of Drag. The range corresponds instead to the integral of the function 1/D evaluated between the initial energy $E_0$ and the final energy $E_f$. The problem formulated so far is not new. An ad-hoc designed drag-profile can satisfy all the requirements. However, in case there are uncertainties there is the need to recompute the profile. Moreover, the design of such profile can be a complicated and time-consuming task, which in any case, might lead to a sub-optimal solution. First, let us discretize the problem by using a Lobatto pseudospectral method. This discretization is based on the so-called "pseudospectral operators". The discrete problem is not built by using uniform distribution of nodes, but using nodes coming from the roots of Legendre-Lobatto polynomials. An example of these roots is depicted in Fig. 2.

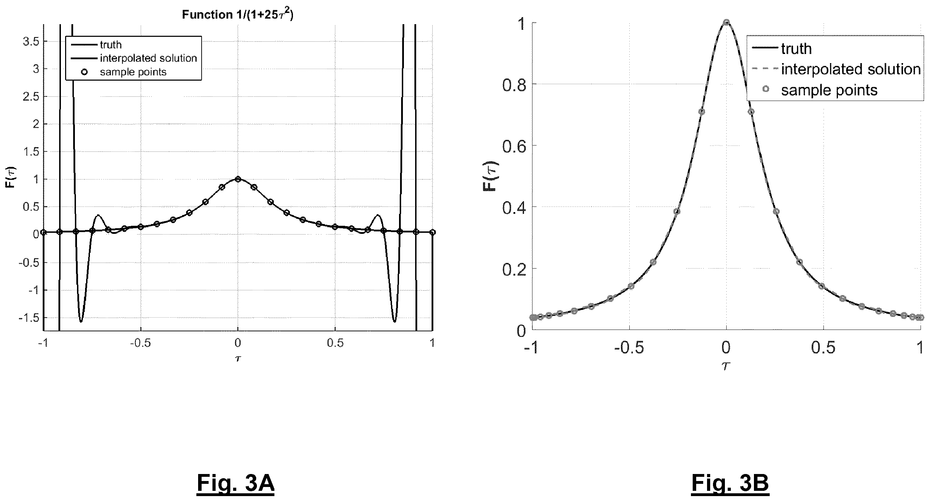

The reason for using these nodes is the following: with these nodes it is possible to approximate any smooth function very accurately with a small number of nodes by using a polynomial. This is not possible in general when uniform discrete nodes are taken, as the so-called Runge phenomenon appears. (That, is artificial oscillations which destroy the polynomial approximation on the edges of the interval we consider). An example of function reconstructed by using uniform nodes and Legendre-Lobatto nodes is depicted in Fig. 3.

The accurate approximation provided by Legendre-Lobatto nodes can be exploited to build a convex version of the entry problem.

In the method that we define the integral is computed as linear combination of the function we want to integrate sampled in the Legendre-Lobatto nodes multiplied by a vector of weights, which are the Gauss-Lobatto quadrature weights

$$\int_{t_0}^{t_f} \Psi\left[t, \mathbf{x}(t), \mathbf{u}(t)\right] dt = \frac{t_f - t_0}{2} \sum_{i=0}^{n} w_i \Psi\left[\mathbf{X}_i, \mathbf{U}_i\right]$$

This approach is exact for polynomials of degree up to 2n -3, where n is the number of Legendre-Lobatto nodes employed to compute the solution. The weights can be computed as

$$w_j = \begin{cases} \dfrac{2}{(n-1)n}, & j = 0 \\ \dfrac{2}{(n-1)nL_{n-1}(\tau_j)^2}, & j = [1, \ldots, n-1] \end{cases}$$

where $L_n$ is the Legendre polynomial of degree n, and $\tau_j$ is the jth Legendre-Lobatto node.

Also, the differential equations are in the current form of the technique discretized by using finite-differences. This approach can be very poor in terms of accuracy. Instead, we propose to approximate the derivatives in the form

$$\dot{\mathbf{X}}_i \cong \mathbf{D} \cdot \mathbf{X}_i, \ i = 1, \ldots n$$

where the D matrix contains the derivative of the polynomials approximating the states **x(t).** When applied to the Lobatto nodes, we have $\mathbf{D_{Lb}}^1$ evaluated in the Legendre-Lobatto nodes. The discretized dynamics become

$$\mathbf{F}_i = \mathbf{D}_{Lb}^1 \cdot \mathbf{X}_i - \frac{t_f - t_0}{2} \mathbf{f}(t_i, \mathbf{X}_i, \mathbf{U}_i) = \mathbf{0}$$

where the factor $(t_f - t_0)/2$ takes into account the fact that Legendre-Lobatto polynomials are defined between -1 and 1, while our problem is defined between $t_0$ and $t_f$. With these definitions it is possible to solve a convex problem by using Lobatto pseudospectral operators.

Let us define the discrete values of drag acceleration as

$$\mathbf{X} = \left\{ \begin{array}{c} X_0 \\ X_1 \\ \vdots \\ X_n \end{array} \right\}$$

To avoid abrupt variations in the drag profile, we can minimize D", that is, the following cost function

$$\min D'' = \min \left\| \mathbf{D}_{Lb}^2 \mathbf{X} \right\|_2$$

The constraints imply upper values for the drag. Moreover, the drag cannot be indefinitely small. So we have

$$D_{min} \leq X_i \leq D_{max} \quad i \in [0, \ldots n]$$

We have also that some initial values of D and D' (imposed by the initial values r, V, and $\gamma$) must be satisfied

$$X_0 = D_0$$

$$X_0' = D_0'$$

We also want to impose the range to be flown. So we can use the Gauss-Lobatto quadrature rule.

$$R \cong -\int_{E_0}^{E_f} \frac{dE}{D} = -\frac{E_f - E_0}{2} \sum_{i=0}^{n} \frac{w_i}{X_i}$$

Finally, final conditions on h and V impose to satisfy

$$X_n = D_f$$

$$X_n' = D_f'$$

This problem is **not** convex. This because the range condition implies a nonlinear equality constraint. (The Xi terms appear in the denominators of a sum.) We can transform this problem into a loss-less convex form.
First, we define a new set of variables $I_i$ as

$$I_i = \frac{1}{X_i} \quad i = [0, \ldots n]$$

We can rewrite the constraints of our problem. For the initial and final conditions we can impose the corresponding equations on I as

$$I_0 = \frac{1}{D_0} \qquad I_n = \frac{1}{D_f}$$

$$I_0' = -\frac{2D_0'}{D_0^2} \qquad I_n' = -\frac{2D_f'}{D_f^2}$$

The range equation can be rewritten as a weighted sum of the terms $I_i$.

$$R = -\frac{E_f - E_0}{2} \sum_{i=0}^{n} w_i I_i \quad i \in [0, \ldots n]$$

The upper and lower boundaries are now

$$D_{max} = I_{min} \leq I_i \leq I_{max} = D_{min}$$

Finally, we have to transform the cost function. We wanted to minimize the second derivative X". By considering the new variables $I_i$, we get

$$X(E) = \frac{1}{I(E)}$$

$$X'' = \frac{2(I')^2}{I^3} - \frac{I''}{I^2}$$

$$\|X''\| = \left\| \frac{2(I')^2}{I^3} - \frac{I''}{I^2} \right\|_2$$

Since I always assumes finite, positive values, we can minimize $\|X''\|_2$ by minimizing the single contributions,

$$\min \|X''\|_2 \iff \begin{cases} \min \|I'\|_2 \\ \min \|(I'')\|_2 \end{cases}$$

We can therefore include two slack variables s' > 0 and s" > 0 such that

$$\|I'\|_2 = \|\mathbf{D}^1_{Lb}\mathbf{I}\|_2 \leq s'$$
$$\|I''\|_2 = \|\mathbf{D}^2_{Lb}\mathbf{I}\|_2 \leq s''$$

and we can rewrite the cost function as

$$\min J = s' + s''$$

With this approach the problem is completely defined and, most important, is convex. Once that a solution is computed

It is possible to extract the states. The altitude and the velocity can be computed by solving the following sets of equations.

$$E = \frac{V^{*2}}{2} - \frac{\mu_\oplus}{h^* + r_\oplus}$$

$$D = \frac{1}{2}\rho(h^*)V^{*2}\frac{S}{m}C_D$$

Note that, although an iterative process, it is a very quick process as reasonable ranges for initializing the algorithms can be given.

The flight-path angle is

$$\gamma = \sin^{-1}\left(\frac{D' - a_{D,\gamma}}{b_{D,\gamma}}\right)$$

With

$$a_{D,\gamma} = D\left[\frac{2}{V^2} + \frac{1}{C_D}\left(C_{D,\alpha}\alpha' + \frac{C_{D,M}M_V}{V}\right)\right]$$

$$b_{D,\gamma} = D\left[-\frac{1}{D}\left(\frac{\rho_h}{\rho} + M_h\frac{C_{D,M}}{C_D}\right) + \frac{g}{DV}\left(\frac{2}{V} + \frac{C_{D,M}M_V}{C_D}\right)\right]$$

Finally, the bank angle is

$$\sigma = \cos^{-1}\left(\frac{u_{FF}}{C_L/C_D}\right)$$

Where

$$u_{FF} = \frac{D'' - a_D}{b_D}$$

$$a_D = D'\left(\frac{\rho'}{\rho} + 2\frac{V'}{V} + \frac{C_D'}{C_D}\right) + D\left(\frac{a_\rho}{\rho} - \frac{\rho'^2}{\rho^2} + 2\frac{a_V}{V} - 2\frac{V'^2}{V^2} + \frac{a_{C_D}}{C_D} - \frac{C_D^2}{C_D^2}\right)$$

$$b_D = D\left(\frac{b_\rho}{\rho} + 2\frac{b_V}{V} + \frac{b_{C_D}}{C_D}\right)$$

Finally, bank reversal logic and a PID controller are added to the scheme.

As example we use the entry scenario for the Horus vehicle, characterized by the following mission profile and constraints.

*Table 1: Characteristics of Horus and Mission scenario.*

| Property | Value | Property | Value |
|---|---|---|---|
| Wing area ($S_{ref}$) [m$^2$] | 110 | Maximum heat flux [kW/m$^2$] | 530 |
| Reentry mass [kg] | 26029 | Maximum g-load [-] | 2.5 |
| Nose Radius [m] | 0.8 | Maximum dynamic pressure [N/m$^2$] | $1 \cdot 10^4$ |
| Initial altitude [km] | 122 | Terminal altitude [km] | $25 \pm 2$ |
| Initial longitude [°] | -106.7 | Terminal Mach number [-] | $2.5 \pm 0.5$ |
| Initial latitude [°] | -22.3 | Terminal distance [km] | $\pm 2$ |
| Initial velocity [m/s] | 7435.5 | Runway longitude [°] | -53.0 |
| Initial flight-path angle [°] | -1.43 | Runway latitude [°] | 5.0 |
| Initial heading [°] | 70.75 | | |

For further details of the Horus vehicle see Mooij, E., The HORUS-2B Reference Vehicle, Delft University of Technology. Memorandum M-682, 1995.

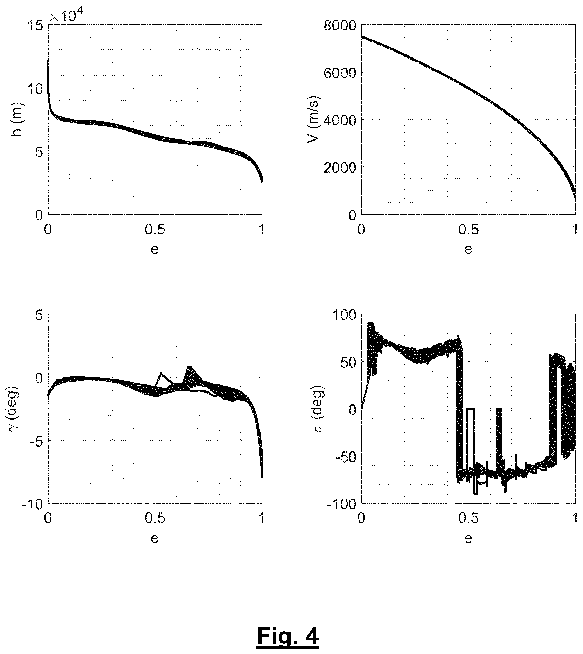

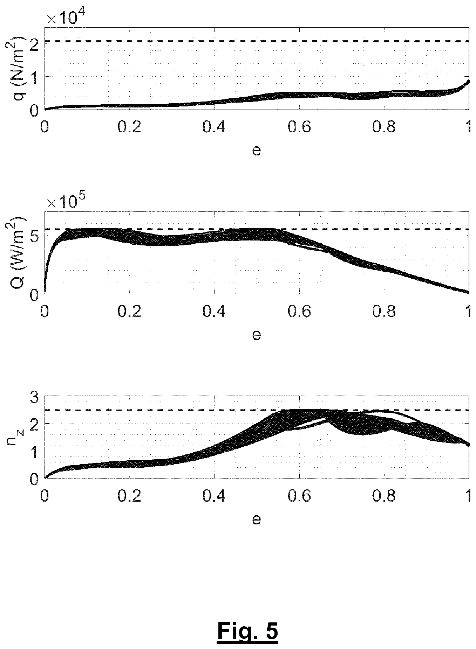

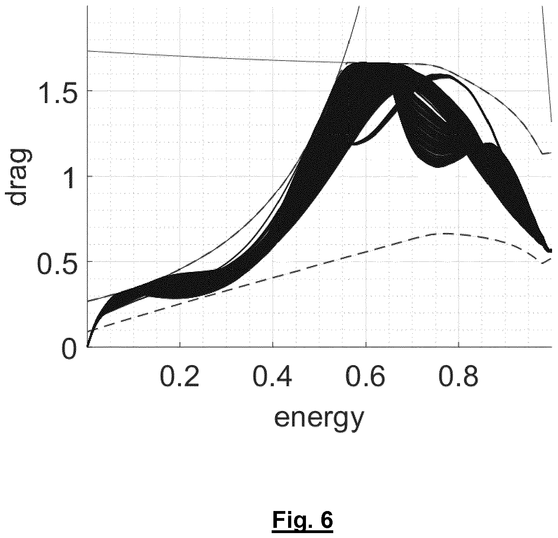

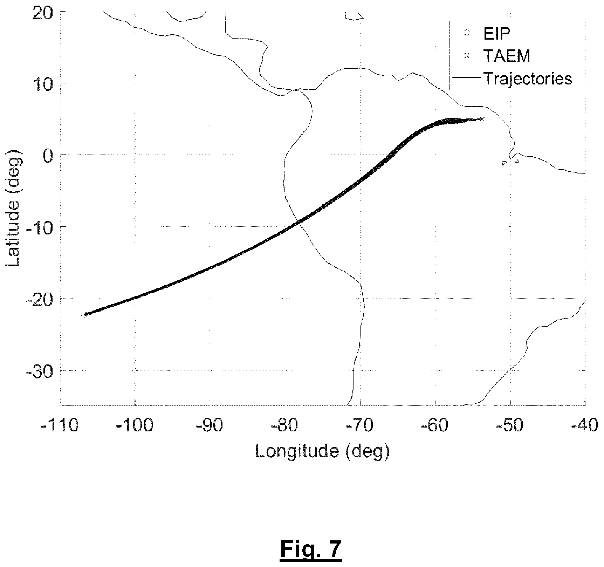

A Montecarlo campaign of 1000 cases has been considered to test the method. Dispersions on all the initial states has been included. The results have been computed by using the full equations of motion, which include also nonlinear terms coming from the rotation of the Earth. Table 1 shows the results obtained by using the proposed approach. States, constraints, trajectories and drag profiles are depicted in Figs. 4-7.

**Dispersions at the entry interface (uniform distribution)**

*Table 2: Initial dispersions included in the MC analysis.*

| Variable | Dispersion | Units |
|---|---|---|
| $\delta h$ | [-250 250] | m |
| $\delta\theta$ | [-0.1 0.1] | deg |
| $\delta\phi$ | [-0.1 0.1] | deg |
| $\delta V$ | [-15 15] | m/s |
| $\delta\gamma$ | [-0.01 0.01] | deg |
| $\delta\psi$ | [-0.01 0.01] | deg |

*Table 3: Montecarlo analysis - 1000 cases. Final dispersions.*

| Final dispersion | Value |
|---|---|
| altitude (m) | 168 +/-1107 |
| speed (m/s) | 12 +/-68 |
| range (km) | 0.63 +/- 0.31 |

All the trajectories are meaningful, and satisfy the requirements.

<u>LIST OF REFERENCE NUMERALS</u>

1 Apparatus
2 Spacecraft
3 Input port
4 State sensor
5 State sensor
6 State sensor
7 State estimator
8 Further input port
9 Input terminal
10 Processor
11 Processor
12 Processor
13 Processor
14 Output port
15 Actuator
16 Actuator
17 Entry trajectory

**Claims**

1. A method of controlling a spacecraft (2) having a state **x**(t) by means of a control **u**(t), t being the time, during an atmospheric entry, the method comprising

   - defining a cost function depending on the state **x**(t), the control **u**(t) and the time t in drag-energy dynamics,
   - defining state constraints to the state **x**(t) and control constraints to the control **u**(t) as drag-energy constraints, the state constraints including a starting state and terminal constraints,
   - determining a minimum of the cost function as a drag-energy profile considering the state constraints and the control constraints,
   - transforming the drag-energy profile into longitudinal states including altitude, velocity, flight-path angle, and bank angle of the spacecraft (2),
   - applying that control **u**(t) to the spacecraft that adjusts the longitudinal states of the spacecraft which result in the determined minimum of the cost function,

   **characterized in that** determining the minimum of the cost function is transferred into a convex problem by introducing a set of variables corresponding to a reciprocal of drag acceleration.

2. The method of claim 1, **characterized in that** the drag-energy dynamics are discretized.

3. The method of claim 2, **characterized in that** the drag-energy dynamics are discretized using pseudospectral operators.

4. The method of claim 2 or 3, **characterized in that** the drag-energy dynamics are discretized using nodes coming from roots of Legendre-Lobatto polynomials.

5. The method of any of the preceding claims, **characterized in that** the cost function is defined such that determining the minimum of the cost function includes minimizing a second derivative of the drag acceleration throughout the drag-energy profile.

6. The method of any of the preceding claims, **characterized in that** the state constraints and the minimum of the cost function are repeatedly or continuously updated using the actual state of the spacecraft (2) as the starting state.

7. The method of any of the preceding claims, **characterized in that** the method is executed on board of the spacecraft (2).

8. The method of any of the preceding claims, **characterized in that** the state constraints include heat rate, dynamic pressure and load factor.

9. The method of any of the preceding claims, **characterized in that** the control $\mathbf{u}$(t) includes variations of the bank angle of the spacecraft (2).

10. An apparatus (1) for controlling a spacecraft (2) during an atmospheric entry, the apparatus (1) comprising

- an input port (3) for receiving signals of state sensors (4, 5, 6) sensing parameters of the state $\mathbf{x}$(t) of the spacecraft (2),
- a state estimator (7) connected to the input port (3) and configured to determine the state $\mathbf{x}$(t) from the signals of the state sensors (4, 5, 6);
- a further input port (8) for receiving mission data on the desired mission of the spacecraft (2) defining the terminal constraints,
- an output port (14) for outputting control signals to actuators (15, 16) of the spacecraft (2);
- a processor (13) configured to execute the method of any of the preceding claims based on the state from the state estimator (7) and the terminal constraints in the mission data and to output the control $\mathbf{u}$(t) as the control signals to the actuators (15, 16).

11. The apparatus (1) of claim 10, **characterized in that** the state estimator (7) includes a Kalman filter.

12. A spacecraft (2) comprising

- an apparatus (1) for controlling the spacecraft (2) during an atmospheric entry according to claim 9,
- state sensors (4, 5, 6) connected to the input port (3) and configured to sense parameters of the state $\mathbf{x}$(t) of the spacecraft (2), and
- actuators (15, 16) connected to the output port (14) and configured to respond to the control signals.

**R**

$x(t)$

$D_0, D_f$

$h, V, \gamma, \sigma$

$\sigma$

$\sigma$

$D'_0, D'_f, D''_0$

$r_f, v_f$

$q_U, Q_U, n_{z,U}$

**Fig. 1**

**Fig. 2**

**Fig. 3A**

**Fig. 3B**

**Fig. 4**

Fig. 5

Fig. 6

**Fig. 7**

**EUROPEAN SEARCH REPORT**

Application Number

EP 17 21 1042

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | ZHENBO WANG ET AL: "Constrained Trajectory Optimization for Planetary Entry via Sequential Convex Programming", AIAA ATMOSPHERIC FLIGHT MECHANICS CONFERENCE, 10 June 2016 (2016-06-10), XP055465510, Reston, Virginia DOI: 10.2514/6.2016-3241 ISBN: 978-1-62410-430-5 * the whole document * | 1-12 | INV. G05D1/08 B64G1/24 B64G1/00 |
| A | ROENNEKE A J ET AL: "RE-ENTRY CONTROL TO A DRAG-VS-ENERGY PROFILE", JOURNAL OF GUIDANCE AND CONTROL AND DYNAMICS, AIAA, RESTON, VA, US, vol. 17, no. 5, 1 September 1994 (1994-09-01), pages 916-920, XP000493379, ISSN: 0731-5090 * Page 916, page 917 right column, page 918. * | 1-12 | |
| A | US 2010/228409 A1 (ACIKMESE BEHCET [US] ET AL) 9 September 2010 (2010-09-09) * Paragraphs [0008], [0011], [0034] * | 1-12 | TECHNICAL FIELDS SEARCHED (IPC) B64G G05D |

-/--

The present search report has been drawn up for all claims

| Place of search | Date of completion of the search | Examiner |
|---|---|---|
| Munich | 8 May 2018 | Roch, Vincent |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 17 21 1042

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LARS BLACKMORE ET AL: "Lossless convexification of control constraints for a class of nonlinear optimal control problems", SYSTEMS AND CONTROL LETTERS, NORTH-HOLLAND PUBLISHING CO., AMSTERDAM, NL, vol. 61, no. 8, 23 April 2012 (2012-04-23), pages 863-870, XP028448910, ISSN: 0167-6911, DOI: 10.1016/J.SYSCONLE.2012.04.010 [retrieved on 2012-05-03] * Abstract, second page right column, fourth page right column, fifth page left column. * | 1-12 | |

TECHNICAL FIELDS
SEARCHED    (IPC)

The present search report has been drawn up for all claims

| Place of search | Date of completion of the search | Examiner |
|---|---|---|
| Munich | 8 May 2018 | Roch, Vincent |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 21 1042

This annex lists the patent family members relating to the patent documents cited in the above-mentioned European search report.
The members are as contained in the European Patent Office EDP file on
The European Patent Office is in no way liable for these particulars which are merely given for the purpose of information.

08-05-2018

| Patent document cited in search report | Publication date | Patent family member(s) | Publication date |
|---|---|---|---|
| US 2010228409 A1 | 09-09-2010 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HARPOLD, J. D. ; GRAVES, C. A.** Shuttle Entry Guidance. *Journal of Astronautical Sciences,* May 1979, vol. 27 (3), 239-268
- **LU, P.** Entry Guidance: A Unified Method. *Journal of Guidance, Control, and Dynamics,* May 2014, vol. 37 (3
- **MEASE, K. D. ; CHEN, D. T. ; TEUFEL, P. ; SCHÖNEBERGER, H.** Reduced-Order Entry Trajectory Planning for Acceleration Guidance. *Journal of Guidance, Control, and Dynamics,* March 2002, vol. 25 (2
- **MOOIJ, E.** Adaptive Heat-Flux Tracking for Re-entry Guidance. *AIAA/AAS Astrodynamics Specialist Conference,* 2014
- **LU, P.** Entry Guidance and Control for Reusable Launch Vehicles. *AIAA Guidance, Navigation, and Control Conference,* 1996
- **TU, K. Y. ; MUNIR, M. S. ; MEASE, K. D.** Drag-Based Predictive Tracking Guidance for Mars Precision Landing. *Journal of Guidance, Control and Dynamics,* July 2000, vol. 23 (4), 620-628
- **SAGLIANO, M.** Development of a Novel Algorithm for High Performance Reentry Guidance. *Ph.D. thesis,* 2016
- **BETTS, J. T.** Practical Methods for Optimal Control and Estimation Using Nonlinear Programming. *SIAM,* 2010
- **BOLLINO, K. P. ; ROSS, I. M. ; DOMAN, D.** Optimal Nonlinear Feedback Guidance for Reentry Vehicles. *AIAA Guidance Navigation, and Control Conference and Exhibit, Keystone,* 2006
- **SINGH, B. ; BHATTACHARYA, R.** Optimal Guidance of Hypersonic Vehicles Using B-Splines and Galerkin Projection. *AIAA Guidance, Navigation and Control Conference and Exhibit,* 2008
- Integrated Guidance and Fault Tolerant Adaptive Control for Mars Entry Vehicle. **MARWAHA, M. ; SINGH, B. ; VALASEK, J. ; BHATTACHARYA, R.** AIAA Guidance, Navigation, and Control Conference. vol. 2009
- **SAGLIANO, M. ; THEIL, S. ; BERGSMA, M. ; D'ONOFRIO, V. ; WHITTLE, L. ; G., V.** On the Radau Pseudospectral Method: theoretical and implementation advances. *CEAS SPACE Journal,* 2017
- **GILL, P. E. ; MURRAY, W. ; SAUNDERS, M. A.** User's Guide for SNOPT Version 7: Software for Large-Scale Nonlinear Programming. University of California, 2008
- On the implementation of an interior-point filter linesearch algorithm for large-scale nonlinear programming. **WÄCHTER, A. ; BIEGLER, L. T.** Math. Program. Springer-Verlag, 2006, vol. 106
- **SARAF, A. ; LEAVITT, J. A. ; CHEN, D. T. ; MEASE, K. D.** Desing and Evaluation of an Acceleration Guidance Algorithm for Entry. *Journal of Spacecraft and Rockets,* November 2004, vol. 41 (6
- In-Flight Entry Trajectory Optimization for Reusable Launch Vehicles. **SCHIERMAN, J. ; HULL, J.** Guidance, Navigation, and Control and Co-located Conferences. American Institute of Aeronautics and Astronautics, August 2005
- **SAGLIANO, M. ; MOOIJ, E. ; THEIL, S.** Onboard Trajectory Generation for Entry Vehicles via Adaptive Multivariate Pseudospectral Interpolation. *Journal of Guidance, Control, and Dynamics,* September 2016, vol. 40 (2), 466-476
- **BOYD, S. ; VANDENBERGHE, L.** *Convex Optimization,* 2004
- **ACIKMESE, B. ; PLOEN, S. R.** Convex programming approach to powered descent guidance for mars landing. *Journal of Guidance, Control, and Dynamics,* 2007, vol. 30 (5), 1353-1366
- **BLACKMORE, L. ; ACIKMESE, B. ; SCHARF, D. P.** Minimum-Landing-Error Powered-Descent Guidance for Mars Landing Using Convex Optimization. *Journal of Guidance, Control, and Dynamics,* July 2010, vol. 33 (4), 1161-1171
- **WANG, Z. ; GRANT, M. J.** *Constrained Trajectory Optimization for Planetary Entry via Sequential Convex Programming*
- **LIU, X. ; SHEN, Z. ; LU, P.** Entry Trajectory Optimization by Second-Order Cone Programming. *Journal of Guidance, Control, and Dynamics,* 2016, vol. 39 (2), 227-241
- **MOOIJ, E.** The HORUS-2B Reference Vehicle. Delft University of Technology, 1995, M-682